Europäisches Patentamt

European Patent Office

Office européen des brevets

(11) Numéro de publication: **0 334 740**
**A1**

## (12) DEMANDE DE BREVET EUROPEEN

(21) Numéro de dépôt: **89400772.3**

(22) Date de dépôt: **20.03.89**

(51) Int. Cl.⁴: **A 63 C 5/03**
**B 62 B 13/16**

(30) Priorité: **21.03.88 FR 8803847**

(43) Date de publication de la demande:
**27.09.89 Bulletin 89/39**

(84) Etats contractants désignés:
**AT CH DE IT LI SE**

(71) Demandeur: **Laborde, Félix Manuel**
**B.P. 234**
**F-52106 Saint Dizier Cedex (FR)**

(72) Inventeur: **Laborde, Félix Manuel**
**B.P. 234**
**F-52106 Saint Dizier Cedex (FR)**

(74) Mandataire: **Colas, Jean-Pierre et al**
**Cabinet de Boisse 37, avenue Franklin D. Roosevelt**
**F-75008 Paris (FR)**

(54) **Véhicule sportif glissant sur neige à une voie et un seul ski porteur.**

(57) L'invention est relative à un véhicule sportif à une voie selon le brevet principal, avec un patin principal (1) relié par un bras (4) articulé sur lui à un patin avant muni d'une colonne de direction (7) et d'un guidon (3).

Pour faciliter l'adaptation du véhicule à la taille de l'utilisateur, ainsi que le transport et le stockage, la liaison entre le bras (4) et la colonne de direction (6) comprend des moyens pour régler l'angle entre le bras et la colonne, ces moyens permettant de rendre la colonne de direction parallèle au patin principal. De préférence le bras (4) est articulé sur un repose-pied rigide (29) relié au ski principal (42) par des moyens (43) concervant la souplesse de ce ski.

EP 0 334 740 A1

**Description**

## VEHICULE SPORTIF GLISSANT SUR NEIGE A UNE VOIE ET UN SEUL SKI PORTEUR

La présente invention concerne les véhicules sportifs à géométrie variable et pliants à une voie glissant sur neige, herbe ou sable où le sportif est debout, le poids de la personne est supporté essentiellement par un patin principal, et où le mécanisme de direction permet de soulever du sol le ski avant ainsi que de changer la trajectoire du véhicule lorsque le ski avant est en contact avec le sol.

FR-A-2.593.710 décrit un véhicule sportif à une voie, comportant un patin principal apte à supporter la plus grande partie du poids d'une personne, et un patin avant monté sur une colonne de direction pourvue d'un guidon à son extrémité opposée au patin avant, et montée à pivot dans un tube de direction relié par un bras au patin principal, et disposé pour permettre de changer la direction d'avancement du véhicule, ce véhicule présentant la particularité que le bras est relié au patin principal par une articulation placée à l'avant dudit patin principal et disposée pour permettre de soulever du sol le patin avant, par un mouvement de guidon vers l'arrière, et d'abaisser sur le sol le patin avant, par un mouvement du guidon vers l'avant afin de commander la direction d'avancement du véhicule. A l'usage, il s'est avéré :

- qu'il était trop encombrant au stockage et manutention du fait de ne pas être pliable ou démontable.

- qu'il était convenable que le plan du guidon (compris comme le plan contenant l'axe de la colonne de direction et parallèle à la ligne passant entre les deux extrémités du guidon) passe par les épaules du sportif. Pour ce, et pour éviter un nombre trop élevé de modèles pouvant convenir à différents gabarits de sportifs, il est convenable que le véhicule soit réglable de façon à pouvoir modifier l'angle formé entre le sol et le plan du guidon lorsque le véhicule repose sur ces deux patins sur un sol plat.

- qu'il était difficile de maîtriser le guidage du véhicule pendant et après les virages, et ce, faute soit d'une prise de carres efficace et sélective par rapport à la longueur de chaque patin et au type de sol, soit d'un effet équivalent. Lors de l'utilisation du véhicule sur sols à grande inclinaison, l'existence d'une seule dérive dans l'axe du ski, comme il est décrit dans le brevet CH-A-597 885, ne résout pas le problème.

- que le positionnement de l'axe d'articulation entre le bras (qui relie le tube de direction au patin principal) et le patin principal, positionnement défini au départ à l'avant du patin principal, devait être reculé de façon à minimiser les mouvements arrière avant induits sur le guidon lors du passage des bosses.

- que les efforts de torsion sur le ski du patin arrière produits par le fait que l'axe d'articulation avant mentionné est placé directement sur le ski du patin arrière étaient trop importants.

- que le guidon, tel que décrit, gênait les possibilités de pliage du véhicule.

- que soit la largeur nécessaire au repose-pieds pour bien positionner les pieds, soit le positionnement des pieds de travers, étaient des facteurs d'encombrement et de possibilités de frottement avec le sol lors de l'inclinaison du véhicule ou lors de l'enfoncement du ski du patin arrière.

- que le bras qui relie le patin principal au tube de direction tel que décrit, pouvait venir buter contre l'avant du ski du patin principal lors du passage des bosses ou sur sols particulièrement accidentés.

Le but de l'invention est de fournir un véhicule du type précité qui ne présente pas les inconvénients indiqués ci-dessus, et en particulier un véhicule dont l'inclinaison du tube de direction puisse correspondre à la conformation de l'utilisateur, et qui soit en outre pliable sous un volume réduit.

L'invention fournit en conséquence un véhicule sportif à une voie, comportant un patin principal apte à supporter la plus grande partie du poids d'une personne, et un patin avant monté sur une colonne de direction pourvue d'un guidon à son extrémité opposée au patin avant, et montée à pivot dans un tube de direction relié par un bras au patin principal, et disposé pour permettre de changer la direction d'avancement du véhicule, le véhicule présentant pour particularité que le bras est relié au patin principal par une articulation placée à l'avant dudit patin principal et disposée pour permettre de soulever du sol le patin avant, par un mouvement de guidon vers l'arrière, et d'abaisser sur le sol le patin avant, par un mouvement du guidon vers l'avant afin de commander la direction d'avancement du véhicule ; le véhicule présentant pour particularité supplémentaire que la liaison entre le bras et le tube de direction comprend une articulation à pivot sensiblement perpendiculaire au plan axial du véhicule et sensiblement parallèle à l'axe de l'articulation entre le bras et le patin principal et un organe de réglage de l'angle qui fait le bras avec la colonne de direction, cet organe et ces articulations permettant de plier le véhicule en rendant la colonne de direction sensiblement parallèle et proche du patin principal.

De préférence, dans un véhicule de ce type, le patin principal comporte une plaque repose-pieds portée par un ski principal qui fait partie du patin principal et où la-dite plaque repose-pieds est rigide, placée au dessus du ski principal et reliée à lui seulement en deux points de sa longueur, le ski pouvant prendre une forme plus ou moins arquée entre et au delà de ces deux points, dans une direction perpendiculaire à son plan, mais sans pouvoir fléchir ou se tordre autour d'un axe parallèle à la direction de marche du patin principal, et où c'est la plaque repose-pieds l'élément qui porte l'articulation qui relie le bras au patin principal, de façon à éviter des efforts de torsion au ski principal.

Suivant une modalité avantageuse le guidon est de forme échancrée, c'est-à-dire en V ou en U vu de face, la profondeur et la largeur de l'échancrure étant calculées pour que, d'une part on puisse plier le véhicule, le repose-pieds passant dans cette échancrure pendant le pliage, et que, d'autre part, lors de l'utilisation d'une remontée mécanique à la traîne, la perche et la sellette puissent passer dans l'échancrure pour être disposées entre les jambes de l'utilisateur.

Suivant une autre modalité avantageuse, le bras reliant le patin principal au tube de direction est aussi de forme échancrée, la profondeur et la largeur de l'échancrure étant calculées pour que l'avant du ski principal puisse passer dans l'échancrure lors du pliage du véhicule et/ou lors du passage de bosses ou de sols particulièrement accidentés.

Suivant une autre modalité avantageuse des dérives latérales sont disposées entre la partie centrale et la partie arrière du patin avant et/ou du patin principal de façon à assurer une prise de carres efficace et sélective par rapport à la longueur de chaque patin. On préfère que ces dérives latérales soient à enfoncement réglable de façon à mieux adapter le véhicule au style de conduite de l'utilisateur et à la qualité du sol.

Suivant une autre modalité avantageuse, le bras reliant le patin principal au tube de direction est de forme échancrée, c'est-à-dire en V ou en U vu du haut, la profondeur et la largeur de l'échancrure étant calculées pour que l'avant du ski principal puisse passer dans l'échancrure lors du pliage du véhicule et/ou lors du passage de bosses ou de sols particulièrement accidentés.

On va maintenant exposer de façon plus détaillée les différents éléments du véhicule proposé à l'aide de quelques exemples pratiques illustrés avec les dessins des figures 1 à 10. Sur ces figures, on a reproduit les références du brevet principal.

La figure 1 est une vue en perspective d'un véhicule selon l'invention, en position de marche.

La figure 2 montre, en élévation, le véhicule de la figure 1 à l'état plié.

La figure 3 est une vue analogue à la figure 2, illustrant un autre mode de pliage.

La figure 4 est une vue, en élévation d'une variante du véhicule de la figure 1, en position de marche.

La figure 5 montre le véhicule de la figure 3, à l'état plié.

La figure 6 est une vue perspective, agrandie, de la région de fixation du ski principal.

Les figures 7 et 8 sont respectivement une coupe et une vue de côté d'un ski portant les dérives.

Les figures 9 et 10 sont des schémas montrant, en coupe, un ski avec dérive axiale et un ski avec deux dérives latérales.

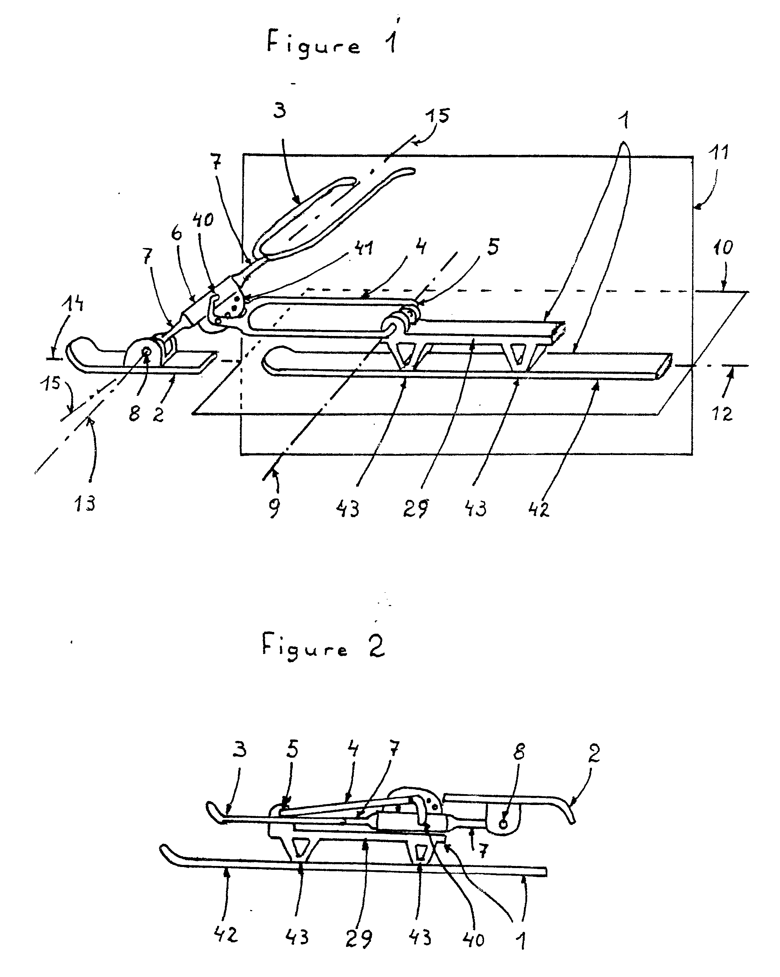

Dans la figure 1 on représente un véhicule ayant une articulation 40 entre le bras 4 et le tube de direction 6 et un organe de réglage 41 de l'angle qui fait le bras 4 avec l'axe 15 de la colonne de direction 7. Cet organe est dans ce cas un ensemble d'éléments formé par une clavette qui traverse le bras 4 ainsi qu'une pièce de réglage solidaire du tube de direction, cette pièce ayant plusieurs trous, équidistants de l'articulation 40 pour leur permettre d'être traversés par la clavette et de fixer ainsi le bras 4 au tube de direction 6 tout en réglant l'angle entre le bras 4 et la colonne de direction 7.

Dans le véhicule de la figure 1 le guidon 3 est échancré permettant ainsi de plier le véhicule en rabattant le guidon 3 sur le bras 4 puis en rabattant le guidon 3 et le bras 4 vers l'arrière en tournant autour et par dessus de l'articulation 5 de façon à se retrouver dans la position pliée indiquée sur la figure 2.

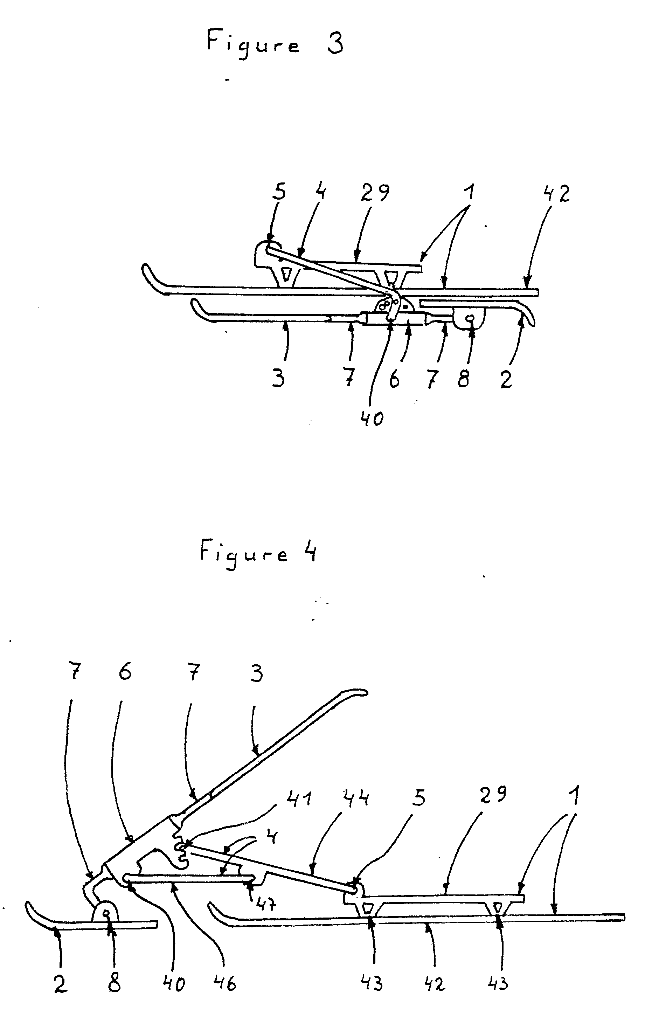

Dans la figure 3 le véhicule de la figure 1 est représenté plié sous une autre forme. L'échancrure du bras 4 permet de passer l'avant du ski arrière 42 du bas vers le haut a travers du bras, puis rabattre le ski avant 2 contre l'arrière et au dessous du ski arrière 42.

Dans la figure 4 un autre véhicule est représenté, sur lequel le bras 4 est formé par deux éléments 44 et 46 pouvant être échancrés ou pas. L'arrière de l'élément supérieur 44 étant relié au patin principal 1 par une articulation 5 et l'avant de cet élément supérieur 44 pouvant être à volonté fixé à différents point d'un organe de réglage 41, ou désolidarisé de celui-ci. Cet organe de réglage 41 est solidaire à la partie supérieure du tube de direction 6. La partie avant de l'élément inférieur 46 et du bras 4 est relié à la partie inférieure du tube de direction 6 par une articulation 40. La partie arrière de l'élément inférieur 46 est reliée à l'élément supérieur 44 par une articulation 47 située sur cet élément supérieur à une distance de son extrémité avant supérieure à la distance existante entre l'articulation 40 située sur la partie inférieure du tube de direction et les points de fixation sur l'organe de réglage 41. Les éléments supérieur 44 et inférieur 46 du bras 4 forment ainsi une structure triangulaire avec le tube de direction 6.

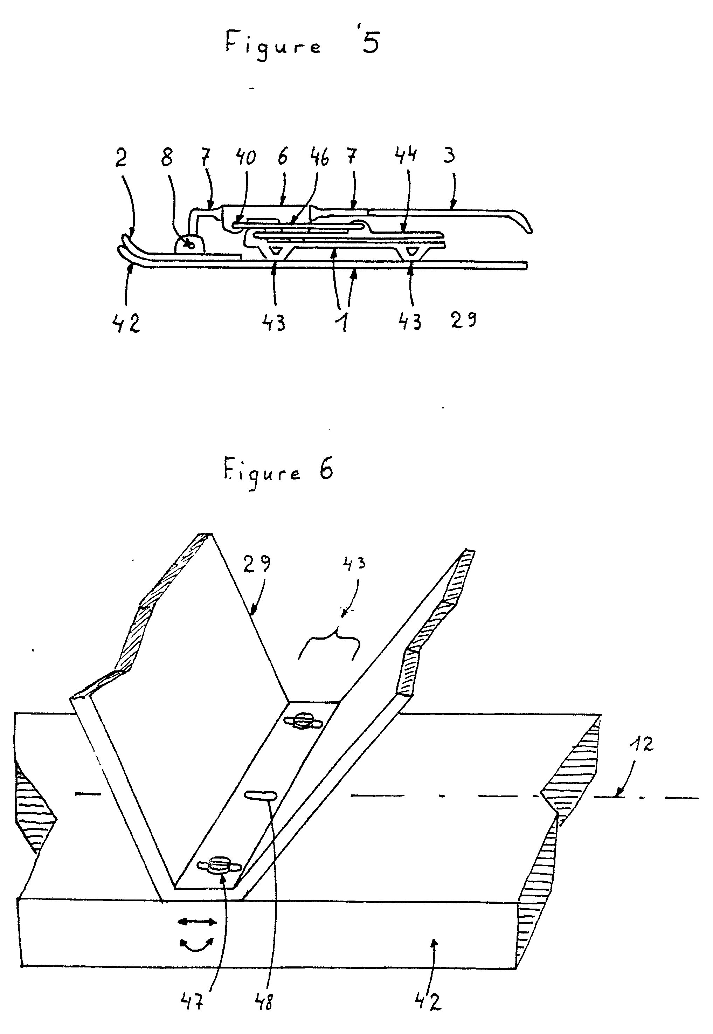

Le véhicule de la figure 4 peut être plié soit comme indiqué sur la figure 5 soit suivant d'autres formes permettant de remettre la colonne de direction sensiblement parallèle et proche du patin principal, dont celles indiquées dans les figures 2 et 3.

Sur les véhicules de la figure 1 et de la figure 4, le ski arrière 42 est relié à la structure repose-pieds 29 seulement par des fixations 43 situées en deux points de la longueur du ski 42. De façon à permettre au ski de se fléchir, ces deux points doivent permettre une certaine rotation du ski par rapport au repose-pieds autour de ces points et d'axes perpendiculaires au plan 11 du véhicule mais non pas autour d'axes sensiblement parallèles à la direction de marche 12 du patin principal. Ces points doivent permettre aussi une certaine liberté de translation du repose-pieds 29 par rapport au ski arrière 42 dans le sens de la direction de marche 12 du patin principal. Comme indiqué sur la figure 6 ceci peut être obtenu en fixant le ski arrière 42 au repose-pieds 29 par des vis 47 traversant au point de fixation 43 des trous oblongs 48 situés sur les pattes du repose-pieds, et permettant un certain déplacement relatif de la patte et du ski. Les trous oblongs 48 ont leur diamètre maximal dans le sens de la direction de marche 12 du patin principal.

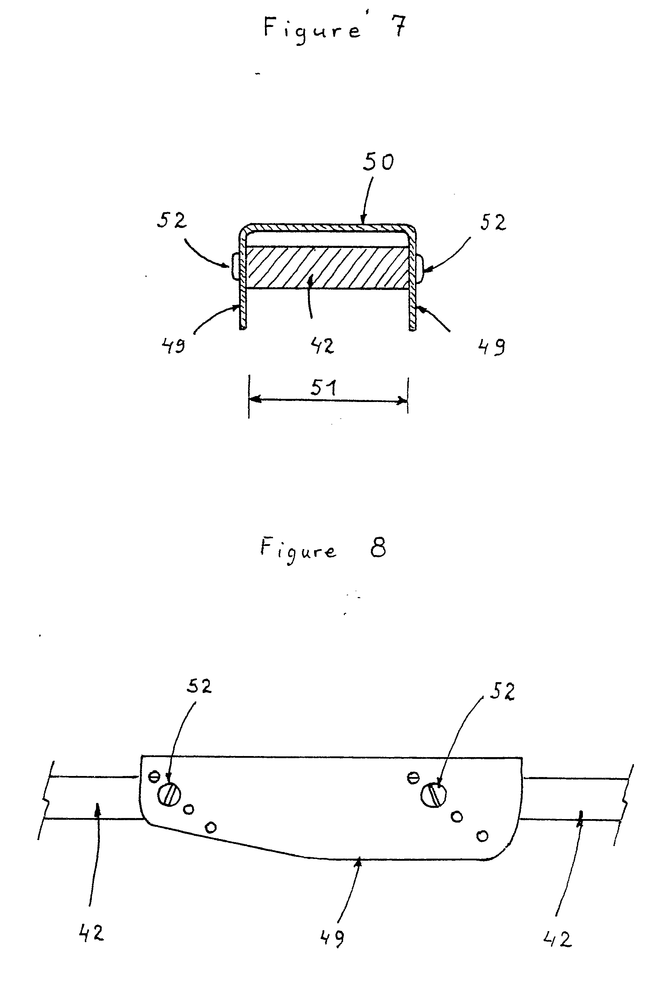

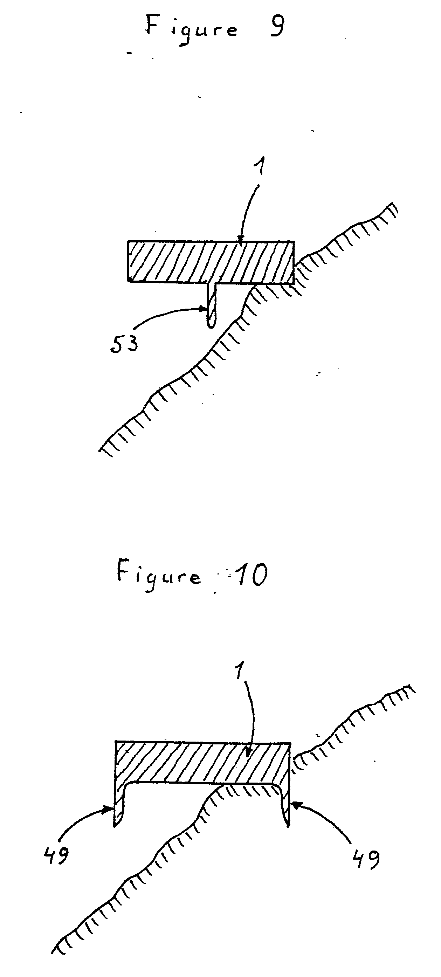

Une forme parmi d'autres de réaliser des dérives latérales 49 consiste à fixer une pièce en acier 50 à section en U ayant une distance de séparation des ailes 51 sensiblement égale à la largeur du ski avant 2 ou arrière 42, par dessus ces skis de façon à ce que les ailes de la pièce fassent office de dérives s'enfonçant au sol. Des vis 52 traversent les ailes de la coulisse fixant la coulisse aux skis et le réglage de l'enfoncement des dérives est réalisé selon le choix des trous de réglage existant à cet effet sur les ailes de la coulisse. Cette modalité de réalisation de dérives latérales est illustrée dans les figures 7 et 8. Les figures 9 et 10 schématisent les avantages des dérives latérales 49 par rapport aux dérives centrales 53, notamment sur sols fortement inclinés où la possibilité de toucher le sol des dérives centrales est fortement diminuée.

**Revendications**

1 - Véhicule sportif à une voie, comportant un patin principal (1) apte à supporter la plus grande partie du poids d'une personne, et un patin avant (2) monté sur une colonne de direction (7) pourvue d'un guidon (3) à son extrémité opposée au patin avant, et montée à pivot dans un tube de direction (6) relié par un bras (4) au patin principal, et disposé pour permettre de changer la direction d'avancement (14) du véhicule, ce véhicule présentant la particularité que la bras est relié au patin principal par une articulation (5) placée à l'avant dudit patin principal et disposée (9) pour permettre de soulever du sol le patin avant, par un mouvement de guidon vers l'arrière, et d'abaisser sur le sol le patin avant, par un mouvement du guidon vers l'avant afin de commander la direction d'avancement du véhicule, caractérisé en ce que la liaison entre le bras (4) et le tube de direction (6) comprend une articulation (40) à pivot sensiblement perpendiculaire au plan axial (11) du véhicule et sensiblement parallèle à l'axe (9) de l'articulation entre le bras et le patin principal et un organe de réglage (41) de l'angle que fait le bras avec la colonne de direction, cet organe et ces articulations permettant de plier le véhicule en rendant la colonne de direction sensiblement parallèle et proche du patin principal.

2 - Véhicule selon revendication 1 et dont le patin principal comporte une plaque repose-pieds (29) portée par un ski principal (42) qui fait partie du patin principal (1), caractérisé en ce que la-dite plaque repose-pieds (29) est rigide, placée au dessus du ski principal et reliée à lui seulement en deux points (43) de sa longueur, le ski pouvant prendre une forme plus ou moins arquée entre et au delà de ces deux points, dans une direction perpendiculaire à son plan (11) mais sans pouvoir fléchir ou se tordre autour d'un axe parallèle à la direction de marche (12) du patin principal.

3 - Véhicule selon les revendication 1 et 2 caractérisé en ce que la plaque repose-pieds (29) porte l'articulation (9) qui relie le bras (4) au patin principal (1), de façon à éviter de transmettre des efforts de torsion au ski principal.

4 - Véhicule selon l'une des revendications 1 à 3 caractérisé en ce que le guidon (3) est de forme échancrée, c'est-à-dire en V ou en U vu de face, la profondeur et la largeur de l'échancrure étant calculées pour que, d'une part, on puisse plier le véhicule, le repose-pieds (29) passant dans cette échancrure pendant le pliage, et que, d'autre part, lors de l'utilisation d'une remontée mécanique à la traîne, la perche et la sellette puissent passer dans l'échancrure pour être disposées entre les jambes de l'utilisateur.

5 - Véhicule selon l'une des revendications 1 à 4, caractérisé en ce que des dérives latérales (49) sont disposées entre la partie centrale et la partie arrière du patin avant et/ou du patin principal.

6 - Véhicule selon la revendication 5, caractérisé en ce que les dérives latérales (49) sont à enfoncement réglable.

7 - Véhicule selon l'une quelconque des revendications précéndentes caractérisé en ce que les bras (4) reliant le patin principal au tube de direction est de forme échancrée, c'est-à-dire un V ou en U vu du haut, la profondeur et la largeur de l'échancrure étant calculées pour que l'avant du ski principal puisse passer dans l'échancrure lors du pliage du véhicule et/ou lors du passage de bosses ou de sols particulièrement accidentés.

Figure 1

Figure 2

EP 0 334 740 A1

Figure 3

Figure 4

Figure '5

Figure 6

# Figure 7

# Figure 8

Figure 9

1

53

Figure 10

1

49

49

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 123 375 (COURTNEY)<br>* Colonne 5, lignes 23-61; figures 5-8 * | 1 | A 63 C 5/03<br>B 62 B 13/16 |
| Y | US-A-1 968 975 (UPSACKER)<br>* Page 2, ligne 60 - page 2, ligne 21; figures * | 1 | |
| A | | 2,4,7 | |
| A | CH-A- 486 889 (PORSCHE)<br>* Colonne 3, lignes 10-36; figures * | 1-3 | |
| A | US-A-2 513 199 (OHLHAVER)<br>* Colonne 2, ligne 25 - colonne 3,<br>ligne 22; figures * | 1,2,4,5<br>,6 | |
| A | CH-A- 597 885 (MASO) | | |
| A | FR-A-2 432 326 (TIEBAULT) | | |
| A | FR-A-2 556 303 (VACHOUX) | | DOMAINES TECHNIQUES RECHERCHES (Int. Cl.4) |
| A | DE-A-3 336 888 (HÄNLE) | | A 63 C<br>B 62 B |
| A | FR-A-2 501 051 (KROB) | | |
| A | DE-A-2 604 562 (JEHRA) | | |
| A | FR-A-2 491 765 (COTE) | | |

**Le présent rapport a été établi pour toutes les revendications**

| Lieu de la recherche | Date d'achèvement de la recherche | Examinateur |
|---|---|---|
| LA HAYE | 08-06-1989 | STEEGMAN R. |

EPO FORM 1503 03.82 (P0402)